# FASCICULE DE BREVET EUROPEEN

(11) **EP 3 670 003 B1**
(45) Date de publication et mention de la délivrance du brevet: **08.02.2023**
(21) Numéro de dépôt: 19213737.0
(22) Date de dépôt: 05.12.2019
(51) Int. Cl.: B05D 3/10, B05D 5/10, B05D 7/02, B29C 59/00, C09J 4/00

(54) **PROCEDE DE RECOUVREMENT D'UNE SURFACE PLASTIQUE PAR UN REVETEMENT PERMANENT**
VERFAHREN ZUR OBERFLÄCHENBESCHICHTUNG EINES KUNSTSTOFFTEILS MIT EINER PERMANENTBESCHICHTUNG
A PROCESS OF COATING THE SURFACE OF A PLASTIC PIECE WITH A PERMANENT COATING

(30) Priorité: 18.12.2018 FR 1873258
(43) Date de publication de la demande: 24.06.2020
(73) Titulaire: Compagnie Plastic Omnium, 69007 Lyon (FR)
(72) Inventeur: VIOT, Frédéric, 01150 SAINTE-JULIE (FR); VIDAL, Sophie, 01150 SAINTE-JULIE (FR); BRIZIN, Jérôme, 01150 SAINTE-JULIE (FR); GUYOT, Julien, 01150 SAINTE-JULIE (FR); VIRELIZIER, François, 01150 SAINTE-JULIE (FR)
(74) Mandataire: LLR

(56) Documents cités:
- EP-A1- 3 031 596
- WO-A1-2016/097654

## Description

### Domaine de l'invention

La présente invention concerne un procédé d'activation d'une surface en matière plastique, et plus particulièrement d'une pièce de véhicule automobile en matière plastique, à fin d'améliorer l'adhésion à des revêtements tels que des colles, peintures ou vernis.

### Etat de la technique

Dans la fabrication des véhicules automobiles, certaines pièces sont, en tout ou partie, en matériau plastique et notamment en polypropylène. Elles sont fréquemment constituées d'un ensemble de pièces, dont certaines présentent des parties visibles. II est fréquent qu'une partie de la surface de ces pièces doive être revêtue de divers revêtements, tels que des revêtements de décoration comme un feuil de peinture. Un exemple de telle pièce est une peau extérieure de hayon assemblée sur une doublure intérieure, un becquet, une porte latérale, un capot, un toit etc. II est également fréquent qu'une portion d'une surface de ces pièces soit une zone de fixation destinée à être assemblée par collage de cette zone à une autre pièce pour constituer une pièce assemblée.

Le collage de telles pièces doit être particulièrement résistant du fait de leur utilisation comme pièces constitutives de véhicules automobiles. Dans les procédés de collage classiques à cette industrie, la surface en matériau plastique de la zone de collage est généralement activée, c'est-à-dire traitée par des procédés physicochimiques destinés à positionner sur la surface du plastique des espèces chimiques qui promeuvent l'adhérence avec des composés organiques tels que des colles, peintures ou vernis à base de polyuréthane, de résines époxy ou polyesters, de polycarbonates ou de résines acryliques. Ces traitements de la surface à coller sont bien connus dans l'industrie automobile : il s'agit du flammage, de l'application de rayons UV, d'ozone, de décharge de type Corona ou de plasma. De telles techniques sont décrites, par exemple, dans les publications brevet EP3015854A1 et WO2016/097654 de la Compagnie Plastic Omnium, ou dans le brevet des Etats-Unis N° US8586149. La technique de flammage est la plus couramment utilisée pour améliorer les propriétés d'adhérence avant l'apposition de couches de peintures ou de vernis. C'est d'ailleurs celle généralement recommandée dans les notices d'utilisation de la plupart des revêtements destinés à l'industrie automobile, voir par exemple EP3031596A1.

Cependant les conditions à remplir pour que le flammage soit performant et aboutisse à une adhésion réellement satisfaisante sont encore largement empiriques. Malgré les techniques utilisées, les défauts provenant d'un problème de mauvaise adhésion sont très fréquents dans l'industrie et peuvent être présents dans plus de 10% des surfaces traitées.

Il existe donc un besoin d'identifier une méthode pour améliorer l'adhésion d'une surface en plastique, et notamment à base de polypropylène, à un composé organique et en particulier une colle. Le polypropylène (PP) est une des matières plastiques les plus utilisées notamment du fait de sa simplicité de fabrication et de moulage et de ces propriétés rhéologiques.

### Description de l'invention

De manière très inattendue, il a été établi qu'un traitement physico-chimique comprenant l'application temporaire d'un matériau thermofusible à base de polyamide, sur une surface à coller en plastique pouvant, ou non, être suivi d'un traitement thermique adéquat (par exemple à chauffage), celui-ci précédent le retrait du matériau thermofusible de ladite surface à coller, permet d'activer cette surface de manière particulièrement efficace et d'obtenir l'adhésion d'un revêtement permanent à cette surface de manière nettement supérieure de celles obtenues par l'usage d'autres méthodes d'activation. Ceci est tout particulièrement le cas lorsque le revêtement est une colle permanente.

Selon un mode de réalisation, l'invention porte sur un procédé d'application d'un revêtement permanent sur une surface en plastique d'une première pièce, comprenant les étapes suivantes :
l'application sur ladite surface en plastique d'une couche d'un matériau thermofusible de préférence à base de polyamide,
le maintien de cette couche de matériau thermofusible sur ladite surface plastique pendant une période de temps allant de quelques minutes à plusieurs heures,
le retrait de cette couche de matériau thermofusible de cette surface en plastique ; et
l'application d'un revêtement permanent sur ladite surface, ledit revêtement permanent étant à base de polyuréthane, d'une résine époxy ou polyesters, d'un polycarbonate et/ou d'une résine acrylique.

De manière très avantageuse, le procédé selon l'invention ne comprend pas d'étape d'activation de la surface en plastique ou de traitement à cette fin après le retrait de la couche de matériau thermofusible. Il est ainsi possible de se dispenser d'utiliser une étape d'activation telle que le flammage, l'application de rayons UV, d'ozone, de décharge de type Corona ou de plasma. En particulier, selon un aspect préféré de l'invention, aucune étape de flammage de la surface en plastique n'est mise en oeuvre ou réalisée. Il est également préféré d'éviter de mettre de telles étapes d'activation (et en particulier du flammage) avant d'apposer le revêtement permanent sur la surface de plastique.

La pièce comprenant une surface en plastique est de préférence une pièce à base d'une matière ou d'un matériau thermoplastique. Ces matières thermoplastiques peuvent comprendre l'acrylonitrile butadiène styrène (ABS), les polyamides tels que les polycaprolactames : [NH-(CH2)5-CO]n (PA-6), et les polyhexaméthylène adipamides : [NH-(CH2)6-NH-CO-(CH2)4-CO]n (PA-6,6,), les polycarbonates (PC), les polyéthylènes haute densité (PE-HD), les polyéthylènes basse densité (PE-LD), les poly(téréphtalate d'éthylène) (PET) amorphe ou cristallin, les poly(méthacrylate de méthyle) (PMMA), les polypropylènes (PP), les polystyrènes (PS) « cristal », polychlorure de vinyle (PVC) rigide et leurs mélanges. Le plastique à base de polypropylène (PP) est une des matières plastiques les plus utilisées notamment du fait de sa simplicité de fabrication et de moulage et de ces propriétés rhéologiques. De plus un matériau à base de polypropylène ou à base de polypropylène/polyéthylène donne des résultats particulièrement satisfaisants.

Il est à noter que l'expression «à base de X » désigne un matériau dont le composant principal est X. Cette expression peut également mais pas nécessairement désigner la composition d'un matériau dont le composant majoritaire est X. Ainsi, par exemple cette expression désigne un matériau comprenant au moins 35% en poids de X, de préférence au moins 40%, plus particulièrement au moins 50% voire, au moins 60% de X en masse par rapport à la masse totale de la composition.

Il convient de noter également que selon l'usage de domaine technique en question, c'est-à-dire la fabrication de pièces de véhicule en plastique les proportions données dans cette description d'une composition sont, par défaut, données en masse par masse totale de la composition en question.

Ce matériau plastique comprend avantageusement une charge minérale ou organique, voire végétale, sous forme de poudre ou de fibres. Cette charge peut être par exemple du quartz, du mica, du kaolin, du phosphate de calcium, du feldspath, de la stéatite, de la craie, du talc, du noir de carbone de la silice synthétique, du sulfate de baryum, de la ferrite de baryum, de la farine de bois ou d'écorce de fruit, de la pâte de cellulose, des fibres de verre, des microsphères de verre creuses très utilisées, silice synthétique, de l'argile nanométrique, du lin, etc. ainsi que leurs mélanges. Cette charge est généralement du talc. Cette charge peut varier de 1 à 75% en poids suivant la nature de la charge, par exemple de 10 à 45%, plus particulièrement de 30 à 40% en masse par rapport à la masse du matériau plastique.

De préférence le plastique peut également comprendre divers additifs et notamment une proportion non négligeable (par exemple de 20 à 24% en masse) d'un élastomère (ayant une fonction de résistance au choc), par exemple un copolymère de type EPR ( *Ethylene Propylene Rubber* ou caoutchouc éthylène propylène) et/ou de type EPM (éthylène-propylène-diène monomère).

De préférence, le plastique comprend un composé antioxydant ou anti-UV.
1) Les composés antioxydants sont par exemple choisis dans le groupe des phosphites comme de IRGAFOS 168, c'est-à-dire le
   Tris(2,4-ditert-butylphényl)phosphite, CAS N° : 31570-04-4, MM 646,9 g/mol et/ou des composés à cycle phénolique encombré comme l'IRGANOX 1076, c'est-à-dire l'octadecyl-3-(3,5-di-tert.butyl-4-hydroxyphényl)-propionate, CAS N° : 2082-79-3 ;
   et/ou
2) des anti-UV, sont par exemple de la famille des amines encombrées.

Lorsqu'au moins un tel composé antioxydant, et/ou anti-UV, sont présents, par exemple dans des proportions allant de 0.5 à 5 % en masse, le procédé selon l'invention est particulièrement efficace.

Avantageusement, dans le procédé selon l'invention le plastique de la surface en plastique comprend, comprend essentiellement ou consiste en, un mélange de polypropylène (éventuellement de polyéthylène), de talc, de caoutchouc éthylène propylène et d'au moins un anti-UV ou antioxydant, par exemple un anti-UV et/ou un antioxydant tel que mentionné au paragraphe précédent.

Une étape du procédé selon l'invention comporte l'application sur ladite surface en plastique d'une couche d'un matériau thermofusible de préférence à base de polyamide et de préférence comprenant essentiellement du polyamide.

Le matériau est avantageusement de type colle thermofusible ("hot melt" en anglais), c'est-à-dire une colle qui devient fluide sous l'action de la chaleur et peut donc être appliquée facilement à l'état liquide. Une fois appliquée, la colle se re-solidifie en refroidissant, adhérant à la surface sans laisser d'interstice. Cette colle refroidie peut s'enlever rapidement et facilement de la pièce du fait de sa souplesse résiduelle et de sa bonne cohésion à température ambiante, permettant de retirer la couche, de préférence d'une seule tenant, sans se fragmenter en de nombreux morceaux. Cette colle peut donc être utilisée pour effectuer un marouflage de la surface en plastique et remplir une fonction de protection de cette zone pendant que d'autres surfaces font l'objet d'autres traitements, comme une peinture. Cette colle thermofusible est de préférence non réticulable, c'est-à-dire qu'en la chauffant à nouveau, elle redevient fluide et peut facilement être réutilisée. En général, les colles thermofusibles sont liquides à partir de 110°C et sont durcies en-dessous de 90°C.

Le matériau thermofusible comprend ainsi de préférence une forte proportion de polyamide, et est, de préférence, constitué essentiellement de polyamide. Par exemple il comprend plus de 90%, de préférence au moins 95% et même au moins 98% en masse de polyamide. Il peut éventuellement comprendre une faible proportion de talc, par exemple de 0 à 5% en masse et/ou un anti-mottant (par exemple dans une proportion massique d'environs 0.1%). En particulier il est préférable que ce polyamide ne comprenne pas de matériau structurel tel que des fibres. Le polyamide peut être un polyamide comprenant une chaine carbonée, de préférence alkyle, ramifiée ou non, en C10 à C14, ou un mélange de tels polyamides. De préférence, le polyamide comprend, est à base de, consiste, ou consiste essentiellement, en un polyamide en C12. Un exemple particulièrement intéressant de colle thermofusible utilisable est une colle à base polyamide, telle que celle commercialisée par la société Henkel sous le nom de « TECHNOMELT PA2420 », ou encore la colle commercialisée par la société Henkel sous la référence « HENKEL 6208 ».

Selon un aspect avantageux de l'invention, le matériau thermofusible ayant formé cette couche solidifiée lors de la mise en oeuvre du procédé selon l'invention, peut être réutilisé. Cette réutilisation peut comprendre une étape de refonte à une température supérieure à 140°C dans un fondoir. On peut prévoir un nettoyage de la matière à réutiliser, par exemple par filtration de la matière et/ou une étape d'ajout de faible quantité de talc, de 0,5 à 3%, pour permettre une granulation simple du matériau recyclé avant son stockage à fin de réutilisation. Ainsi le matériau thermofusible à base de polyamide peut avoir été recyclé, ce qui est avantageux du point de vue environnemental.

L'application du matériau thermofusible sur la surface en plastique est généralement effectuée par dépose du matériau fondu. Le matériau thermoplastique d'activation est avantageusement fondu à une température inférieure à celle recommandée. Par exemple dans le cas d'utilisation d'un polyamide en C12, cette température est de préférence de 160°C à 170°C, en particulier 165°C.

Cette dépose est de préférence réalisée automatiquement en utilisant un robot paramétrable de façon à prédéfinir la largeur et l'épaisseur de la couche. Il est généralement recommandé que la largeur de la couche soit supérieure ou égale à 8mm, par exemple sa largeur peut être voisine de 20 mm (avec éventuellement des coulures plus larges par endroit). L'épaisseur de la couche est généralement comprise entre 1 et 3 mm, par exemple 1,5 ± 0.5 mm. Ces paramètres correspondent aux dimensions courantes de surfaces de collage dans l'industrie automobile.

Une fois déposé sous forme de couche sur la surface destinée à être collée, le matériau thermofusible est avantageusement laissé à refroidir, pendant un laps de temps pouvant aller de 15 secondes à 10mn, de préférence entre 30 secondes et une minute 30 secondes, et généralement environ 1 min.

Une fois la dépose du matériau thermofusible effectuée directement sur la surface en plastique, le contact est maintenu entre ces deux matériaux de manière à permettre l'activation du plastique par le matériau thermoplastique. La période de temps de contact peut varier suivant la nature du matériau de quelques minutes (par exemple (2 minutes) à plusieurs heures (par exemple 5 heures), voire même plusieurs jours. Cependant il a été déterminé qu'une période de d'environ au moins 2 heures donne de bons résultats, en particulier lorsque le substrat est à base de PP et/ou de PE. De manière avantageuse l'étape de contact comprend une étape de chauffage. La température peut varier mais elle ne doit avantageusement pas dépasser la température de fusion du matériau thermofusible et doit être de préférence inférieure à celle-ci. Ainsi cette température est avantageusement choisie de 50°C à 100°C, par exemple de 60°C à 90°C. Une température d'environ 80°C ± 5°C est particulièrement préférée. La période de chauffage peut varier de plusieurs heures à quelques minutes. Cependant une période allant de 0,25 à 2 heures (en particulier environ 0,5 heures) permet d'obtenir des résultats d'activation satisfaisants. Dans le cas où une étape de chauffage est effectuée, une période de refroidissement d'un temps équivalent au chauffage (par exemple une demi-heure) est généralement recommandée. Dans un tel cas, le temps de pause total peut alors varier de 1 à 2 heures.

De manière particulièrement avantageuse le matériau thermofusible peut, en plus de permettre l'activation de la surface plastique, protéger cette surface. Par exemple, si cette surface est une piste de collage d'une pièce, dont la surface restante doit être peinte. Le matériau thermofusible peut protéger la piste de collage lors de l'application de couches de peintures ou de vernis, et de manière particulièrement préférée protéger la surface en plastique d'un éventuel flammage effectué pour activer les surfaces à peindre. De même l'étape de chauffage peut avantageusement, en plus de permettre l'activation de la surface en plastique, permettre le séchage et/ou la cuisson d'un feuil de peinture disposé autour de ladite surface. De tels feuils de peinture sont typiquement composés d'une succession de revêtements de type Primaire/Base/Vernis. Par exemple, le primaire peut être de type polyuréthane ou acrylique, et être disposé en une couche d'une épaisseur pouvant aller de 5 à 20 µm, conducteur ou non. La base peut être de type urée, ou polyuréthane, ou acrylique et la couche de ce revêtement être d'une épaisseur allant de 5 à 40µm. Le vernis peut-être de type polyuréthane, acrylique, siloxane ou un mélange de ces composés, et d'une épaisseur de 10 à 40µm.

Une fois l'étape de chauffage effectué, la couche de matériau thermofusible est retirée, de préférence après son refroidissement (par exemple après de 5 à 30 mn après l'arrêt du chauffage). Ce retrait est effectué soit par traction manuelle, soit par traction mécanique. L'activation de la surface est ainsi obtenue et celle-ci peut être revêtue du revêtement permanent. Avant de revêtir la surface en plastique du revêtement il peut être avantageux de nettoyer ladite surface, par exemple à l'aide d'un tampon ou d'une lingette imbibée d'un agent nettoyant tel qu'un alcool (par exemple l'alcool isopropyle).

Le revêtement permanent peut être choisi parmi les revêtements à base de polyuréthane, d'une résine époxy ou polyesters, d'un polycarbonate et/ou d'une résine acrylique. Cependant des résultats particulièrement satisfaisants ont été obtenus lors de l'utilisation d'un revêtement à base de polyol/isocyanate. Ce type de revêtement bicomposant est généralement destiné au collage haute résistance de pièces plastiques.

Préférentiellement, ledit revêtement permanent est une colle. Ainsi le procédé selon l'invention est particulièrement adapté au collage d'une surface en plastique à l'aide d'une colle permanente à base de polyuréthane, d'une résine époxy ou polyesters, d'un polycarbonate et/ou d'une résine acrylique. En particulier la colle est une colle polyuréthane bi-composants à base de polyol(s) et d'isocyanate. Le terme isocyanate comprend également les dérivé(s) d'isocyanate(s), tel que le diisocyanate. Dans de telles colles, la proportion relative en volume v/v de polyols/isocyanate est généralement de 1 ± 10%, par exemple 50/50. Le procédé peut ainsi permettre l'assemblage permanent par collage d'une deuxième pièce avec la première pièce, de préférence pour permettre l'assemblage et/ou la fabrication de pièce de véhicule automobile.

Le revêtement permanent peut être déposé sur la surface en plastique par robot ou par tout autre moyen. Il est à noter que pour un emploi pour la fabrication de pièce de véhicule automobile, emploi particulièrement envisagé, la piste de revêtement permanent, en particulier la piste de colle déposée, est avantageusement d'une épaisseur de 1,5 ± 0.5 mm et d'une largeur de plus de 8 mm pour obtenir des résultats satisfaisants. Lorsque le procédé est un procédé de collage la pièce à coller à la surface en plastique est mise en contact avec la celle-ci et le revêtement permanent (dans ce cas une colle) qui y est apposée et ces pièces sont maintenues en contact sous pression pour le temps nécessaire à ce que le collage s'effectue, par exemple pour une période de 30s à 5 mn.

De manière avantageuse, seule une étape de nettoyage de la surface plastique intervient entre le retrait du matériau thermoplastique et l'application du revêtement permanent.

Le procédé selon l'invention permet d'obtenir des résultats substantiellement meilleurs que lorsque d'autres méthodes d'activation, telles que le flammage, sont utilisées. Les résultats particulièrement positifs en termes de nature de la rupture adhésive lors du délaminage du procédé selon l'invention sont exemplifiés dans la présente demande. Cependant une amélioration de la résistance mécanique au cisaillement effectué selon le test standard DIN EN 1465 : 2009 est également obtenue, notamment pour des pièces en plastiques assemblées par collage selon le procédé de l'invention.

Un autre objet de l'invention est l'utilisation d'un matériau thermofusible à base de polyamide pour le traitement temporaire d'une surface en plastique et de préférence où ledit plastique est à base de polypropylène, ou à base de polypropylène/polyéthylène, et comprend, en outre, un composé antioxydant et/ou anti-UV. Cette utilisation et les matériaux étant de préférence, tels que décrits précédemment ou subséquemment.

L'invention a donc également pour objet l'utilisation d'un procédé tel que décrit précédemment pour fabriquer une pièce, et en particulier, une pièce extérieure de véhicule automobile, telle qu'une peau de hayon, une peau de pare-chocs avant ou arrière ; une aile avant ou arrière ; un montant de baie ; un bas de caisse ; une porte latérale ; un capot ; un convergent tel qu'un becquet de toit ou spoiler de toit ; un toit ; ainsi que les pièces obtenues par un tel procédé.
[fig.1]

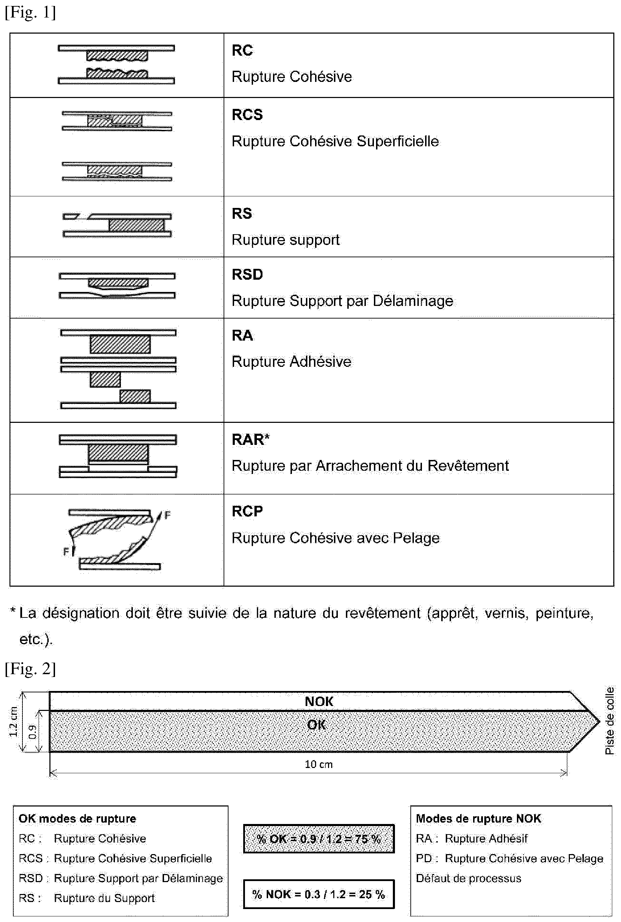

   La figure 1 représente les différents types de ruptures cohésives ou adhésives.
[fig.2]
   La figure 2 représente comment mesurer la proportion de rupture cohésive acceptable (OK) par rapport à la proportion de rupture adhésive non acceptable (NOK).

### Exemple 1 : Activation d'une surface d'un matériau en polypropylène constitutive d'une pièce automobile : un panneau de porte de hayon

Une pièce d'aspect, en l'espèce un panneau de porte de hayon, est utilisé. Ce panneau est destiné à être fixé par collage sur un ensemble comprenant une peau de hayon et un caisson. Cette pièce est constituée en majeure partie de polypropylène et obtenue par moulage à injection selon les techniques standards dans l'industrie automobile. Le matériau à base de polypropylène (PP) EBP830 de la société TOTAL à la formulation suivante : 46% de PP, 22% d'EPR (ethylène-propylène-rubber), 33% de talc, la masse restante comprenant divers additifs tels que des anti-UV et notamment de l'IRGAFOS 168 et de l'IRGANOX 1076.

Une bande de matériau thermoplastique à base de polyamide en C12 (PA12) est déposée à l'aide d'un robot sur une partie de la surface de la pièce. Cette partie correspond à la piste de collage, c'est-à-dire à l'endroit où la colle sera déposée pour solidariser la pièce avec une autre pièce du véhicule. Le matériau thermoplastique d'activation utilisé est une résine thermoplastique hotmelt TECHNOMELT PA2420 comprenant essentiellement un polyamide, avec une petite charge en talc d'environ 1% en masse par rapport à la masse de la résine.

Le matériau thermoplastique d'activation est fondu à 165°C de manière automatique et, une fois déposé sous forme de couche sur la surface destinée à être collée, il est laissé à refroidir environ 1 minute. La partie de la pièce destinée à être peinte est alors dégraissée à l'alcool isopropylique (IPA) puis après évaporation (environ 30 secondes) elle est activée par flammage en conditions stoechiométriques avec un mélange propane/air.

Cette partie activée est alors peinte selon les procédés usités dans l'industrie automobile. Plus particulièrement un robot effectue un dépôt en chaine de 3 couches successives de composant pour former un feuil de peinture. Ces couches sont constituées d'une première couche, ou primaire, de type polyuréthane, d'une seconde couche, ou base, de type mélamine puis d'une troisième et dernière couche, ou vernis, ayant un type mixte polyuréthane/acrylique.

La pièce est ensuite chauffée à 80°C pendant 1/2h. Le temps de pause permet notamment d'activer la surface à coller et le chauffage a pour avantage de faire sécher et réticuler les couches de peintures.

A la sortie de la chaine de peinture, c'est-à-dire après de 5 à 30 mn après l'arrêt du chauffage, la couche de matériau thermoplastique à base de PA12 est retirée par traction manuelle. La surface qu'elle recouvre est alors nettoyée avec une lingette d'IPA. Une colle permanente bi-composante polyol/isocyanate destinée au collage haute résistance de pièces plastiques est déposée par robot sur la piste de collage du panneau de porte de hayon qui a été protégée. La piste de colle déposée est d'une épaisseur de 1,5 ± 0.5 mm et d'une largeur de plus de 8 mm. Le panneau de porte est mis en contact avec la porte de hayon et les deux pièces sont maintenues en position sous pression pendant 1 minute à température ambiante. Cet exemple est répété pour une pièce de même type mais correspondant à un modèle de véhicule différent. Ainsi deux panneaux distincts, V1 et V2, sont obtenus. Les matériaux des panneaux V1 et V2 sont identiques.

### Exemple 2 : Exemple comparatif entre le procédé de l'invention et l'utilisation d'un ruban de masquage.

Pour démontrer l'activation de la surface de collage de la pièce une expérience a été menée sur une pièce de forme différente mais dont le matériau la constituant est la même que celui utilisé à de l'exemple 1 : un spoiler. L'utilisation de pièces de forme différente n'a été effectuée que pour des raisons pratiques et cette différence de formes ne peut avoir d'implication sur les résultats du test. Cet exemple est effectué sur deux spoilers, chacun de ceux-ci correspondant au modèle de véhicule suscités V1 et V2. Ainsi deux spoilers distincts V1 et V2 sont obtenus.

Le procédé décrit à l'exemple 1 a été répété avec une bande adhésive de marque TESA qui a été utilisée à la place du matériau en PA12, pour réaliser un masquage temporaire d'une partie de la surface de la pièce. Cette bande adhésive est constituée d'un support papier sur laquelle une couche d'adhésif de type caoutchouc/colle acrylique. Le procédé décrit à l'exemple 1 a été repris à l'identique jusqu'à l'enlèvement du ruban adhésif. Pour effectuer le test comparatif, les panneaux et les spoilers ont été collés à d'autres pièces formant le hayon, c'est-à-dire une peau de hayon et un caisson de hayon.

La colle définitive utilisée pour coller la surface de collage activée à une autre pièce est de type polyuréthane bi composant (polyol/isocyanate) typiquement utilisée dans l'industrie automobile. Dans cet exemple la colle permanente utilisée est commercialisée sous l'appellation ADEKIT A257BK/H6257 (Adhésif Polyuréthane bi composant Bas module - Haute flexibilité) par la société AXSON FRANCE - SikaAxson.

Le procédé de collage est le suivant : les pistes de collage des peaux de hayons et des caissons de hayons sont nettoyées avec des lingettes imbibées d'un mélange 70/30 en volume d'alcool isopropyle/eau désionisée de même type que précédemment.

La surface de collage est activée par flammage en utilisant les mêmes technique et conditions que pour celles décrites ci-dessus pour l'application du feuil. Puis la colle est disposée sur la piste de collage du spoiler au moyen d'un robot. Le spoiler est alors mis en contact avec un assemblage peau/caisson de hayon et les deux pièces sont maintenues en position pendant 1 minute puis laissé à sécher 2 heures.

Pour permettre d'établir la réalité des effets d'activateur d'adhésion du procédé selon l'invention, les exemples ont été répétés cinq (5x) fois sur chaque modèle V1 et V2. Les résultats présentés dans le tableau sont les moyennes des résultats obtenus. Le test effectué est un test de conformité qui consiste à réaliser le délaminage des pièces collées à l'aide d'une sollicitation mécanique. Une fois cette délamination (décollage) effectuée, il est possible de qualifier les performances d'adhésion du collage structural par cotation des faciès de rupture sur le produit collé délaminé. Ce test peut être fait sur les pièces de véhicule automobile elles-mêmes (comme dans l'exemple présenté) ou bien sur des éprouvettes, c'est-à-dire des languettes de dimensions standardisées (par exemple de 125x25mm).

Le test doit être fait dans des conditions standard. Il doit être réalisé dans un local dont la température est comprise entre 15 et 30°C. La colle doit être complètement réticulée (dans ce cas la période de séchage est de 7 jours à température ambiante env. 20°C) et les pièces doivent être stockées au préalable 2 heures au minimum dans cette ambiance, avant la réalisation du test. Pour les pièces testées à l'état initial (H0), la pièce est installée sur un plan de travail plat, stable et dégagé (type établi). La pièce est maintenue à l'aide de serre-joints (au minimum deux pour éviter la rotation de la pièce). Les pièces subissant un vieillissement (type H7, H14...) sont généralement découpées en plusieurs zones de 20-30 cm de longueur tout le long de la piste de collage par souci d'encombrement dans les équipements associés au vieillissement (étuves, enceintes climatiques...).

Dans les deux cas, il convient de pénétrer la zone de collage à l'aide du burin. Puis taper le burin au moyen du marteau perpendiculairement au cordon de colle, et ce jusqu'à ce que le burin traverse le cordon. L'amorce est ainsi créée. Remarque : plus l'outil est fin plus il sera aisé de traverser le cordon, si un burin est trop épais il risque de détériorer les substrats. La pièce peut être ensuite délaminée. Pour ce faire on insère le burin contre une des surfaces collées parallèlement au cordon de colle puis on tape le burin au moyen du marteau pour décoller l'autre surface collée. On progresse de la même façon sur plusieurs centimètres de façon à ce que la zone décollée soit suffisamment grande, puis faire un effet de levier avec le burin pour réaliser la décohésion entre les deux surfaces collées. Ce procédé est répété sur toutes les parties collées de la pièce à tester de manière à obtenir une délamination complète.

Sur certaines pièces, ou sur certaines parties de celles-ci, il n'est pas aisé de réaliser l'effet de levier avec les burins. Il faut donc, au moyen du marteau faire pénétrer le burin au travers du cordon de colle à plusieurs endroits, et répéter l'opération avec le deuxième burin dans une zone voisine. Dans tous les cas il convient de limiter la dégradation du cordon de colle par contact direct avec les outils, bien qu'il soit possible de s'appuyer légèrement sur le cordon de colle. Toute surface de cordon qui aurait été dégradée par un outil ne sera pas prise en compte dans la cotation du faciès de rupture.

La cotation, ou analyse, du faciès de rupture se fait en référence à la norme standard ISO10365 :1992. Celle-ci permet d'observer la nature de la rupture puis de la quantifier de manière à aboutir à un pourcentage de conformité. On distingue ainsi 7 types de rupture : la rupture cohésive (RC), recherchée, qui intervient dans le corps du matériau adhésif, la rupture adhésive (RA), à éviter, qui se produit à l'interface avec le support. Une rupture cohésive superficielle (RCS), qui est acceptable, est un type intermédiaire qui intervient dans le corps de l'adhésif mais qui est positionnée proche de l'interface avec les parois collées. Lorsque c'est le support qui se brise, la rupture est de type rupture support (RS) ou rupture support par délaminage (RSD), lorsqu'une partie seulement de l'épaisseur de matériau est arraché. La rupture cohésive avec pelage (RCP) décrit l'occurrence d'une rupture cohésive accompagnée d'un pelage partiel de l'adhésif du support (c'est-à-dire d'une RA partielle de celui-ci). Enfin dans le cas d'un support laminé présentant un revêtement, la rupture par arrachement du revêtement (RCP) décrit la rupture par l'arrachement du revêtement du support.

Dans ce test, les surfaces de rupture sont mesurées selon leurs typologies et classées en RC, RCS, RS, RSD, RA, RAR et RCP. Les ruptures RC, RCS, RS, RSD (ou ruptures cohésives) sont acceptables tandis que les ruptures RA, RAR et RCP (ou rupture adhésive) ne le sont pas. La mesure se fait en prenant en compte, sur une longueur donnée, par exemple 10 cm, la proportion de rupture cohésive acceptable par rapport à la proportion de rupture non acceptable, telle que représentée sur la Figure 2. On note que lorsque la largeur de la piste de collage est supérieure à 1 cm, un joint acceptable présent sur une largeur de 1cm est coté comme 100%.

Le tableau 1 montre en pourcentage la rupture cohésive, soit 1) entre les spoilers et l'assemblage peau/caisson de hayon, soit 2) entre les panneaux et l'assemblage peau/ caisson de hayon. Ce test permet d'établir la tenue de la colle.

Les tests H0 ont été effectués sur des assemblages ayant séchés pendant 7 jours.

Les tests H7 ont été effectués sur des assemblages qui, après 7 jours de séchage, ont été vieillis par une mise en étuve pendant 7 jours, mise en étuve en cataplasme humide dans un sachet fermé avec coton imbibé d'eau. La température de l'étuve est de 70°C (100% d'humidité). Les pièces subissent également un choc thermique : elles sont soumises 2h à une température de -20°C. Ce choc thermique est effectué après le passage à l'étuve puis retour à température ambiante pour les tests mécaniques.

Les % de conformité sont des valeurs représentant le pourcentage de la surface de la piste de collage après délaminage présentant un type de rupture (facies) acceptable par rapport au reste de la surface de collage.

La Table 1 décrit les résultats de ce test comparatif.

**[Tableaux 1]**

| **Modèle** | **Numéro de la pièce et type de test effectué sur celle-ci** | **% conformité spoiler(art antérieur)** | **% conformité panneau (Invention)** |
|---|---|---|---|
| **V1** | H0_1 | 2 | 67 |
| | H0_2 | 1 | 88 |
| | H7_1 | 0 | 81 |
| | H7_2 | 0 | 87 |
| | H7_3 | 0 | 85 |
| **V2** | H0_1 | 0 | 87 |
| | H0_2 | 4 | 83 |
| | H7_1 | 0 | 88 |
| | H7_2 | 0 | 82 |
| | H7_3 | 0 | 88 |

Ainsi les pièces assemblées selon la méthode de l'invention présente un taux de rupture adhésive très faible et dans la grande majorité des cas qui est substantiellement au-delà de la limite acceptable dans l'industrie automobile. Cette limite étant d'au moins 80% de rupture cohésive à l'état initial et d'au moins 70% de rupture cohésive après vieillissement. Ce taux d'acceptabilité est bien supérieur à celui obtenu en utilisant une étape d'activation par flammage telle qu'utilisée dans l'art antérieur.

La résine TECHNOMELT PA 2420 est vendue par la société HENKEL AG & Co. KGaA, 40191 Düsseldorf, GERMANY. Sa température d'application recommandée est de 180 à 201°C et elle présente les caractéristiques suivantes en février 2013 :

### DONNÉES TECHNIQUES

Point de ramollissement, °C ASTM E28 (dans la glycérine) : 123 à 131
Viscosité fondante à 180°C, mPa.s 3 000
Viscosité fondante à 190°C, mPa.s entre 1 500 et 2 500
Viscosité fondante à 210°C, mPa.s
ASTM D 3236 (RVT, broche 27) 1 000
Densité, g / cm³, ASTM D 1963 0,97
Force, N / mm², ASTM D 638 5
Résistance à la rupture, N / mm², ASTM D 638 3.5
Dureté Shore D, ASTM D 2240 32
Allongement, %, ASTM D 638 400
Module E 2 %, N / mm², ASTM D 638 70
Test de mandrin 100 %, °C, ASTM D 3111 -5

L'invention n'est pas limitée aux modes de réalisations présentées et d'autres modes de réalisation apparaîtront clairement à l'homme du métier. Il est notamment possible d'activer des surfaces non destinées à être collées mais destinées à être peintes. Ceci est en particulier le cas pour des revêtements à base de polyuréthane.

## Revendications

1. Un procédé d'application d'un revêtement permanent sur une surface en plastique d'une première pièce, comprenant les étapes suivantes :
- l'application sur ladite surface en plastique d'une couche d'un matériau thermofusible à base de polyamide,
- le maintien de cette couche de matériau thermofusible sur ladite surface plastique pendant une période de temps allant de quelques minutes à plusieurs heures,
- le retrait de cette couche de matériau thermofusible de cette surface en plastique ; et
- l'application d'un revêtement permanent sur ladite surface, ledit revêtement permanent étant à base de polyuréthane, d'une résine époxy ou polyesters, d'un polycarbonate et/ou d'une résine acrylique.

2. Le procédé selon la revendication 1, où aucune étape de flammage sur la surface de plastique n'est réalisée.

3. Le procédé selon la revendication 1 ou 2, l'étape de maintient comprend une étape de chauffage.

4. Le procédé selon l'une quelconque des revendications 1 à 3, où ledit matériau thermofusible est à base de polyamide, et comprend essentiellement du polyamide.

5. Le procédé selon l'une quelconque des revendications 1 à 4, où ledit matériau thermofusible est à base de polyamide et comprend, est à base de, consiste, ou consiste essentiellement, en un polyamide en C12.

6. Le procédé selon l'une quelconque des revendications 1 à 5, où la pièce comprenant une surface en plastique est à base d'un matériau thermoplastique choisi dans le groupe constitué par l'acrylonitrile butadiène styrène (ABS), les polyamides tels que les polycaprolactames : [NH-(CH2)5-CO]n (PA-6), et les polyhexaméthylène adipamides : [NH-(CH2)6-NH-CO-(CH2)4-CO]n (PA-6,6,), les polycarbonates (PC), les polyéthylènes haute densité (PE-HD), les polyéthylènes basse densité (PE-LD), les poly(téréphtalate d'éthylène) (PET) amorphe ou cristallin, les poly(méthacrylate de méthyle) (PMMA), les polypropylènes (PP), les polystyrènes (PS) « cristal », polychlorure de vinyle (PVC) rigide et leurs mélanges.

7. Le procédé selon la revendication 6, où ledit matériau thermoplastique est à base de polypropylène.

8. Le procédé selon l'une quelconque des revendications 1 à 7, où ledit plastique comprend un composé antioxydant ou anti-UV.

9. Le procédé selon l'une quelconque des revendications 1 à 8, où ledit revêtement permanent est une colle.

10. Le procédé selon l'une quelconque des revendications 1 à 9 où ladite première pièce est une pièce de véhicule automobile.

11. Utilisation d'un matériau thermofusible à base de polyamide pour le traitement temporaire d'une surface en plastique pour permettre l'adhésion d'un revêtement permanent à cette surface, de préférence ledit plastique est à base de polypropylène, ou à base de polypropylène/polyéthylène, et comprend, en outre, un composé antioxydant et/ou anti-UV.

## Patentansprüche

1. Verfahren zum Aufbringen einer dauerhaften Beschichtung auf eine Kunststoffoberfläche eines ersten Teils, das die folgenden Schritte aufweist:
- Aufbringen einer Schicht aus einem heißschmelzenden Material auf Polyamidbasis auf die Kunststoffoberfläche,
- Halten dieser Schicht aus heißschmelzendem Material auf der Kunststoffoberfläche für einen Zeitraum von einigen Minuten bis zu mehreren Stunden,
- Entfernen der Schicht aus heißschmelzendem Material von der Kunststoffoberfläche; und
- Aufbringen einer dauerhaften Beschichtung auf die Oberfläche, wobei die dauerhafte Beschichtung auf Polyurethan, einem Epoxid- oder Polyesterharz, einem Polycarbonat und/oder einem Acrylharz basiert.

2. Verfahren nach Anspruch 1, wobei kein Beflammungsschritt auf der Kunststoffoberfläche durchgeführt wird.

3. Verfahren nach Anspruch 1 oder 2 wobei der Schritt des Haltens einen Erwärmungsschritt umfasst.

4. Verfahren nach einem der Ansprüche 1 bis 3, wobei das heißschmelzende Material auf Polyamid basiert und im Wesentlichen Polyamid aufweist.

5. Verfahren nach einem der Ansprüche 1 bis 4, wobei das heißschmelzende Material auf Polyamid basiert und ein C12-Polyamid aufweist, darauf basiert, daraus besteht oder im Wesentlichen daraus besteht.

6. Verfahren nach einem der Ansprüche 1 bis 5, wobei das Teil, das eine Kunststoffoberfläche aufweist, auf einem thermoplastischen Material basiert, das aus der Gruppe ausgewählt ist, die aus Acrylnitril-Butadien-Styrol (ABS) besteht, Polyamiden wie Polycaprolactame: [NH-(CH2)5-CO]n (PA-6), und Polyhexamethylenadipamide:
[NH- (CH2)6-NH-CO-(CH2)4-CO]n (PA-6,6,), Polycarbonate (PC), Polyethylene hoher Dichte (PE-HD), Polyethylene niedriger Dichte (PE-LD), amorphes oder kristallines Polyethylenterephthalat (PET), Poly(methylmethacrylat) (PMMA), Polypropylen (PP), Polystyrol (PS) "kristallin", Polyvinylchlorid (PVC) hart und deren Mischungen.

7. Das Verfahren nach Anspruch 6, wobei das thermoplastische Material auf Polypropylen basiert.

8. Das Verfahren nach einem der Ansprüche 1 bis 7, wobei der Kunststoff eine Antioxidans- oder UV-Verbindung aufweist.

9. Das Verfahren nach einem der Ansprüche 1 bis 8, wobei die permanente Beschichtung ein Klebstoff ist.

10. Verfahren nach einem der Ansprüche 1 bis 9, wobei das erste Teil ein Teil eines Kraftfahrzeugs ist.

11. Verwendung eines heißschmelzenden Material auf Polyamidbasis zur vorübergehenden Behandlung einer Kunststoffoberfläche, um die Haftung einer dauerhaften Beschichtung an dieser Oberfläche zu ermöglichen, wobei der Kunststoff vorzugsweise auf Polypropylenbasis oder auf Polypropylen/Polyethylen basiert und außerdem eine Antioxidans- und/oder UV-Verbindung aufweist.

## Claims

1. A method of applying a permanent coating to a plastic surface of a first part, comprising the steps of:
- applying to said plastic surface a layer of a polyamide-based hot-melt material,
- maintaining this layer of hot-melt plastic material on said surface for a period of time ranging from a few minutes to several hours,
- removing this layer of hot-melt material from this plastic surface; and
- applying a permanent coating on said surface, said permanent coating being based on polyurethane, an epoxy resin or polyesters, a polycarbonate and/or an acrylic resin.

2. The method of claim 1, wherein no flame treatment step on the plastic surface is carried out.

3. The method of claim 1 or 2,wherein the maintaining step comprises a heating step.

4. The method according to any one of claims 1 to 3, wherein said hot-melt material is polyamide-based, and essentially comprises polyamide.

5. The method according to any one of claims 1 to 4, wherein said hot-melt material is based on polyamide and comprises, is based on, consists, or consists essentially of a C12 polyamide.

6. The method according to any one of claims 1 to 5, wherein the part comprising a plastic surface is based on a thermoplastic material selected from the group consisting of acrylonitrile butadiene styrene (ABS), polyamides such as polycaprolactams: [NH-(CH2)5-CO]n (PA-6), and polyhexamethylene adipamides: [NH-(CH 2)6-NH-CO-(CH2)4-CO]n (PA-6,6,), polycarbonates (PC), high-density polyethylenes (PE-HD), lowdensity polyethylenes (PE-LD), amorphous or crystalline polyethylene terephthalate) (PET), poly(methyl methacrylate) (PMMA), polypropylenes (PP), "crystal" polystyrenes (PS), rigid polyvinyl chloride (PVC) and mixtures thereof.

7. The method of claim 6, wherein said thermoplastic material is polypropylene-based.

8. The method of any one of claims 1 to 7, wherein said plastic comprises an antioxidant or anti-UV compound.

9. The method of any one of claims 1 to 8, wherein said permanent coating is a glue.

10. The method of any one of claims 1 to 9, wherein said first part is a motor vehicle part.

11. Use of a polyamide-based hot-melt material for the temporary treatment of a plastic surface to allow a permanent coating to adhere to that surface, preferably said plastic is polypropylene-based, or polypropylene/polyethylene-based, and further comprises an antioxidant and/or anti-UV compound.
